# EUROPÄISCHE PATENTSCHRIFT

(11) **EP 3 325 203 B1**
(45) Veröffentlichungstag und Bekanntmachung des Hinweises auf die Patenterteilung: **25.08.2021**
(21) Anmeldenummer: 16741002.6
(22) Anmeldetag: 18.07.2016
(51) Int. Cl.: B23F 19/05, B23F 5/16

(54) **VERFAHREN ZUM HONEN VON ZAHNRÄDERN**
METHOD FOR HONING GEARS
PROCÉDÉ DE PIERRAGE DE ROUES DENTÉES

(30) Priorität: 17.07.2015 DE 102015111663
(43) Veröffentlichungstag der Anmeldung: 30.05.2018
(73) Patentinhaber: Präwema Antriebstechnik GmbH, 37269 Eschwege/Werra (DE)
(72) Erfinder: SCHIEKE, Jörg, 99092 Erfurt-Marbach (DE)
(74) Vertreter: Cohausz & Florack
(86) Internationale Anmeldenummer: PCT/EP2016/067038
(87) Internationale Veröffentlichungsnummer: WO 2017/013056

(56) Entgegenhaltungen:
- DE-A1- 10 027 011
- DE-A1- 10 242 569
- DE-U1-202006 002 878
- JP-A- H0 398 713
- JP-A- H04 193 414
- SCHRIEFER H: "Spheric Honing Machine ZH250", 19990714, 14. Juli 1999 (1999-07-14), Seiten 1-18, XP001571180,

## Beschreibung

Die Erfindung betrifft ein Verfahren gemäß dem Oberbegriff des Anspruchs 1 zum Honbearbeiten eines Zahnrads, bei dem das jeweils zu honende Zahnrad und ein mit einer zur Verzahnung des Zahnrads korrespondierenden Verzahnung versehenes Honwerkzeug um jeweils eine Drehachse drehend miteinander in Eingriff gebracht werden. Dabei sind die Drehachsen von Zahnrad und Honwerkzeug unter einem Achskreuzwinkel einander kreuzend ausgerichtet. Gleichzeitig werden Zahnrad und Honwerkzeug in Achsrichtung der Drehachse des Zahnrads zwischen zwei Umkehrstellungen oszillierend relativ zueinander bewegt. Dabei werden das Zahnrad und das Honwerkzeug in einer der oszillierenden Bewegung überlagerten Bewegung in bezogen auf die Drehachse des Zahnrads radialer Richtung ausgehend von einer Endstellung der radialen Zustellung aufeinander zugestellt, um einen Materialabtrag am Zahnrad zu bewirken.

Ein derartiges Verfahren ist aus einem Katalog von The Gleason Works (SCHRIEFER H: "Spheric Honing Machine ZH250", Seiten 1 bis 18 [XP001571180]) bekannt.

Das Verzahnungs- bzw. Zahnradhonen ist ein spanendes Feinbearbeitungsverfahren mit geometrisch unbestimmter Schneide. Zur Anwendung kommt dieses Honverfahren üblicherweise bei der Feinbearbeitung von gehärteten Zahnrädern, an deren Geometrie und Oberflächenbeschaffenheit höchste Anforderungen gestellt werden.

Das für die Honbearbeitung eingesetzte Honwerkzeug, auch Honrad, Honring oder Honstein genannt, besteht üblicherweise aus einer Kunstharz- oder Keramikbindung, in die Hartstoffschleifkörner aus Edelkorund, Sinterkorund oder Bornitrid eingebettet sind.

Bei der Zahnradhonbearbeitung wälzen das zahnradförmige Honwerkzeug und das zu bearbeitende Zahnrad in synchronen Drehbewegungen kontinuierlich aufeinander ab. Die Verzahnungen von Honwerkzeug und Zahnrad kämmen dabei unter einem Achskreuzwinkel, der zwischen den windschiefen Drehachsen von Honwerkzeug und Zahnrad eingestellt ist.

Durch die Abwälzdrehung und den Achskreuzwinkel liegt zwischen den Zahnflanken des Honwerkzeugs und den Zahnflanken des zu bearbeitenden Zahnrads im Wälzkontakt eine gleitende Relativbewegung vor, die den Spanabtrag am Zahnrad bewirkt. Die Gleitbewegung des Honwerkzeugs im Kontakt mit einer Zahnflanke des Zahnrads setzt sich aus einer durch die Abwälzdrehung erzeugten radialen Bewegung und einer durch den Achskreuzwinkel erzeugten axialen Bewegung zusammen.

Gleichzeitig wird das Honwerkzeug relativ zum Zahnrad oder das Zahnrad relativ zum Honwerkzeug in Richtung der Drehachse des Zahnrads bewegt, um eine gleichmäßige Bearbeitung der Zahnflanken des Zahnrades über deren Breite zu erzielen. Der Materialabtrag wird dabei über die Zustellung in radialer Richtung eingestellt. Weist das zu honende Zahnrad eine Schrägverzahnung auf, so wird die oszillierende Bewegung als "Schraubenbewegung" ausgeführt, indem der linearen Bewegung des Zahnrads entlang seiner Drehachse eine Rotation um seine Drehachse überlagert wird.

Mit der voranstehend erläuterten Vorgehensweise lassen sich die Zahnflanken eines Zahnrads so bearbeiten, dass sie nicht nur strengen Anforderungen an die Exaktheit ihrer Geometrie entsprechen, sondern auch in den Bereichen, in denen es bei im Gebrauch miteinander kämmenden Zahnrädern zum Kontakt kommt, eine Oberflächenbeschaffenheit aufweisen, welche in Getrieben, die mit Getriebeölen mit einer heute zum Standard gehörenden Viskosität geschmiert werden, eine minimierte Geräuschentwicklung gewährleisten.

Neuere Entwicklungen im Bereich der Automobilindustrie zielen jedoch darauf ab, auch in Getrieben dünnflüssige Öle einzusetzen. Es hat sich herausgestellt, dass bei Verwendung solcher Öle die von einem Getriebe ausgehenden Geräuschemissionen ansteigen.

Der Erfindung lag vor diesem Hintergrund die Aufgabe zu Grunde, ein Verfahren zur Honbearbeitung von Zahnrädern anzugeben, deren Oberflächenbeschaffenheit weiter optimiert ist, so dass Getriebe, die mit erfindungsgemäß bearbeiteten Zahnrädern ausgestattet sind, minimierte Geräuschemissionen verursachen.

Die Erfindung hat diese Aufgabe dadurch gelöst, dass bei der Honbearbeitung von Zahnrädern die in Anspruch 1 angegebenen Schritte absolviert werden.

Vorteilhafte Ausgestaltungen der Erfindung sind in den abhängigen Ansprüchen angegeben und werden nachfolgend, wie der allgemeine Erfindungsgedanke, im Einzelnen erläutert.

Beim erfindungsgemäßen Verfahren zum Honbearbeiten eines Zahnrads werden das jeweils zu honende Zahnrad und ein mit einer zur Verzahnung des Zahnrads korrespondierenden Verzahnung versehenes Honwerkzeug um jeweils eine Drehachse drehend miteinander in Eingriff gebracht, wobei die Drehachsen von Zahnrad und Honwerkzeug unter einem Achskreuzwinkel einander kreuzend ausgerichtet sind, wobei Zahnrad und Honwerkzeug in Achsrichtung der Drehachse des Zahnrads zwischen zwei Umkehrstellungen, oszillierend relativ zueinander bewegt werden und wobei das Zahnrad und das Honwerkzeug ausgehend von einer Endstellung in bezogen auf die Drehachse des Zahnrads radialer Richtung aufeinander zugestellt werden, um einen Materialabtrag am Zahnrad zu bewirken.

Erfindungsgemäß wird nun bei der in Achsrichtung der Drehachse des Zahnrads gerichteten oszillierenden Relativbewegung die Drehstellung des Zahnrads bezogen auf seine Drehachse in Abhängigkeit von der Zustellung in radialer Richtung derart verändert, dass während des zur jeweiligen Endstellung der in radialer Richtung erfolgenden Zustellung führenden, in radialer Richtung gerichteten Austauchens aus der jeweils zugeordneten Zahnlücke des Zahnrads ein Kontakt zwischen dem jeweiligen Zahn des Honwerkzeugs und einer der Flanken der die betreffende Zahnlücke begrenzenden Zähne des Zahnrads besteht.

Die Erfindung basiert auf dem Gedanken, bei der Honbearbeitung eines Zahnrads die Relativbewegung zwischen Zahnrad und Honwerkzeug, über die die Zustellung in radialer Richtung bewirkt wird, mit einer um seine Drehachse erfolgende zusätzliche Verdrehung des Zahnrades so zu verkoppeln, dass sich beim Austauchen des Zahnrads aus dem Honwerkzeug, d.h. beim in radialer Richtung entgegen der Zustellbewegung erfolgenden Herausheben des Zahnrads aus der Zahnlücke, die Zahnflanken von Zahnrad und Honwerkzeug stets in Kontakt befinden und zwar solange, bis das Zahnrad seine jeweilige Endstellung der in radialer Richtung erfolgenden Zustellung erreicht hat.. Dabei gleitet die Zahnflanke des Zahnrads an der ihr zugeordneten Zahnflanke des Honwerkzeugs entlang mit der Folge, das im Bereich des Gleitkontakts etwaig vorhandene Erhebungen oder sonstige Formungleichmäßigkeiten eingeebnet werden. Dies wird zweckmäßigerweise für beide Flanken der Zähne des zu honenden Zahnrads durchgeführt.

Indem das Honwerkzeug beim Austauchen des jeweiligen Zahns die von dem betreffenden Zahn bearbeitete Zahnflanke berührt, werden die an der Oberfläche der jeweiligen Flanke vorhandenen, aus vorangegangenen Bearbeitungsgängen stammenden Bearbeitungsspuren somit "verwischt" und gleichmäßig verteilte, optimierte Oberflächenrauigkeiten über die gesamte Breite der betreffenden Flanke erreicht. Typische gemittelte Rautiefen Rz liegen bei erfindungsgemäß gehonten Flankenoberflächen unter 1 µm.

In Folge der minimierten Oberflächenrauigkeit können in Getrieben, die mit erfindungsgemäß bearbeiteten Zahnrädern ausgestattet sind, dünnere Öle eingesetzt werden, die aufgrund ihrer geringen Viskosität lediglich minimierte Verluste bedingen und damit eine optimierte Ausnutzung der Antriebsenergie des Fahrzeugs, in dem das Getriebe verbaut ist, ermöglichen.

Gleichzeitig wird durch die erfindungsgemäß optimierten Oberflächen der Zahnflanken eines erfindungsgemäß bearbeiteten Zahnrads ein optimales Abwälzverhalten in Kombination mit damit einhergehend minimierten Geräuschemissionen erreicht.

Die erfindungsgemäßen Vorgehensweise ist dann besonders wirksam, wenn der Kontakt zwischen der jeweiligen Flanke des Zahns des Zahnrades und der zugeordneten Flanke des Zahns des Honwerkzeugs konstant aufrechterhalten wird, bis das Zahnrad seine Endstellung der in radialer Richtung erfolgenden Zustellung erreicht hat oder, falls der jeweilige Zahn auf seinem Weg zur Endstellung vollständig aus der Zahnlücke gehoben wird, bis der Zahn die Zahnlücke verlassen hat.

Besonders vorteilhaft lässt sich die Erfindung bei der Honbearbeitung eines außenverzahnten Zahnrads anwenden, das mit Hilfe eines üblicherweise ringförmig ausgebildeten Honwerkzeugs, das eine Innenverzahnung aufweist, bearbeitet wird.

Weist das zu bearbeitende Zahnrad eine Schrägverzahnung auf, so kann auch beim erfindungsgemäßen Verfahren in an sich bekannter Weise der in Richtung der Drehachse des Zahnrads gerichteten oszillierenden Relativbewegung eine Drehung um die Drehachse des Zahnrads überlagert werden.

Die Effektivität, mit der sich das erfindungsgemäße Verfahren durchführen lässt, kann dadurch gesteigert werden, dass sowohl während des von der jeweiligen Endstellung der in radialer Richtung erfolgenden Zustellung ausgehenden Eintauchens in als auch beim Austauchen aus der jeweiligen Zahnlücke des Zahnrads ein dauerhafter Kontakt zwischen einer der Zahnflanken der die Zahnlücke begrenzenden Zähne des Zahnrads und dem zugeordneten Zahn des Honwerkzeugs besteht. Hierzu kann beim Eintauchen des jeweiligen Zahns des Honwerkzeugs in die ihm jeweils zugeordnete Zahnlücke ein Kontakt mit der Flanke des die Zahnlücke an ihrer einen Seite begrenzenden einen Zahns und beim Austauchen aus der betreffenden Zahnlücke ein Kontakt mit der Flanke des die Zahnlücke an ihrer anderen Seite begrenzenden anderen Zahns bestehen.

Um jeweils die beiden Flanken der eine Zahnlücke jeweils seitlich begrenzenden Zähne in erfindungsgemäßer Weise zu bearbeiten, können bei der erfindungsgemäßen Honbearbeitung mindestens zwei Umläufe um seine Drehachse ausgeführt werden, wobei der jeweilige Zahn des Honwerkzeugs bei einem Umlauf während des Austauchens mit derjenigen Flanke der ihm jeweils zugeordneten Zahnlücke des Zahnrads bis zum Erreichen der Endstellung der in radialer Richtung erfolgenden Zustellung in Kontakt gehalten wird, die die Zahnlücke an ihrer in Drehrichtung des Zahnrads gesehen vorne liegenden Seite begrenzt, und bei einem anderen Umlauf während des Austauchens mit derjenigen Flanke der ihm dann zugeordneten Zahnlücke des Zahnrads bis zu seinem vollständigen Austritt aus der Zahnlücke in Kontakt gehalten wird, die die Zahnlücke an ihrer in Drehrichtung des Zahnrads gesehen hinten liegenden Seite begrenzt. Auf diese Weise lassen sich die in frontaler Ansicht eines Zahnrads gesehen "linken" und "rechten" Flanken der Zähne des Zahnrads gleichmäßig in erfindungsgemäßer Weise bearbeiten. Dabei versteht es sich von selbst, dass nicht nur zwei, sondern in der in der Praxis üblichen Weise eine Vielzahl von Umläufen absolviert werden können, um das Zahnrad fertig zu bearbeiten.

Nachfolgend wird die Erfindung anhand einer ein Ausführungsbeispiel darstellenden Zeichnung näher erläutert. Es zeigen jeweils schematisch:
- Fig. 1: eine Maschine zur Durchführung des erfindungsgemäßen Verfahrens in einer Draufsicht;

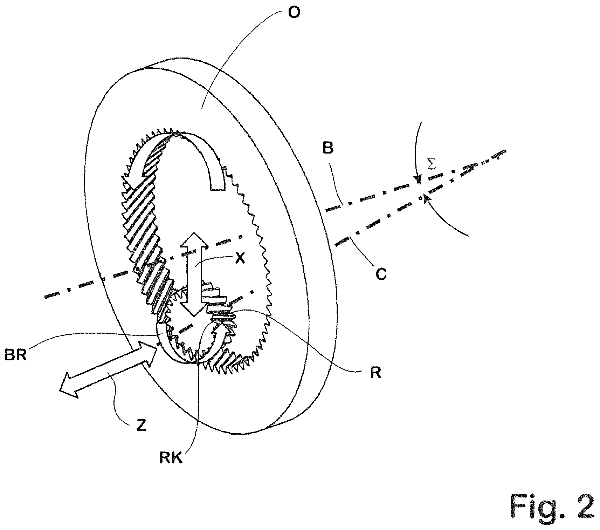

- Fig. 2: ein außenverzahntes Zahnrad bei der Honbearbeitung mittels eines als Honring ausgebildeten Honwerkzeugs in einer perspektivischen Ansicht von oben;
- Fig. 3: das Zahnrad und das Honwerkzeug bei der Honbearbeitung in einer ersten Arbeitsstellung in einer vergrößerten Ansicht;
- Fig. 4: das Zahnrad und das Honwerkzeug bei der Honbearbeitung in einer zweiten Arbeitsstellung in einer vergrößerten Ansicht;
- Fig. 5: das Zahnrad und das Honwerkzeug bei der Honbearbeitung bei konventioneller Bearbeitungsweise in einer vergrößerten Ansicht.

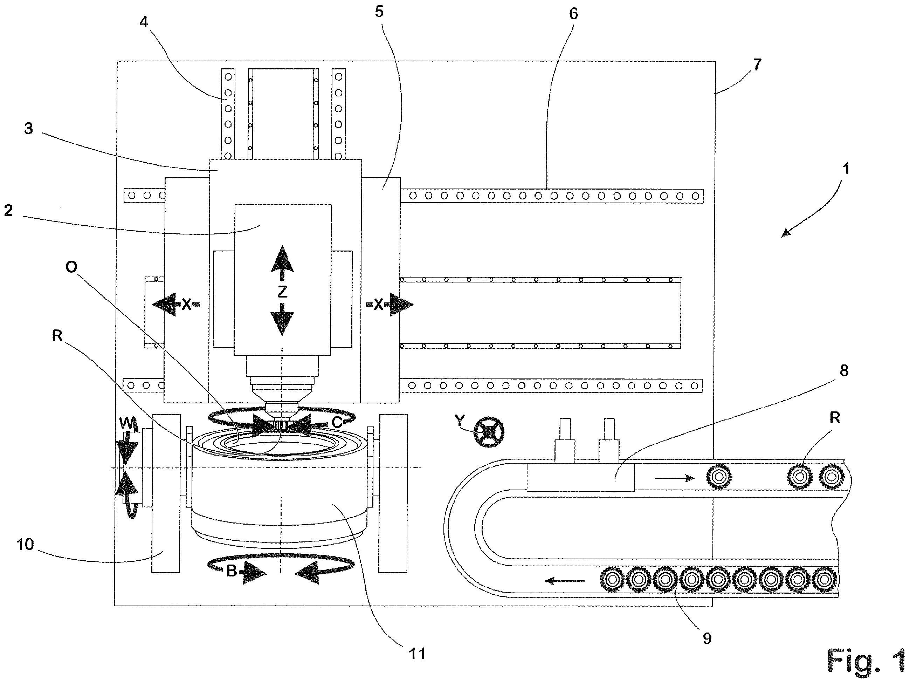

Die in Fig. 1 dargestellte, in ihrem Grundkonzept einer Maschine mit sechs Maschinenachsen, d.h. Linearbewegungsachsen X,Y,Z, Drehachsen B,C und Schwenkachse W, entsprechenden Maschine 1 für die Honbearbeitung von Zahnrädern R umfasst eine Werkstückspindel 2, an deren einer Stirnseite jeweils ein zu bearbeitendes Zahnrad R in ein an sich bekannter Weise gehalten ist. Über den Antrieb der Werkstückspindel 2 ist das betreffende Zahnrad R um die erste DrehachseC rotierend angetrieben.

Die Werkstückspindel 2 ist auf einem Längsschlitten 3 gelagert, der auf einer Linearführung 4 mittels eines Linearantriebs entlang der Linearbewegungsachse Z verschiebbar ist. Die Linearführung 4 mit ihrem Linearantrieb ist dabei auf einem Querschlitten 5 angeordnet, der auf einer zweiten Linearführung 6 gelagert und mittels eines zweiten Linearantriebs entlang der zweiten Linearbewegungsachse X bewegbar ist.

Die Linearbewegungsachse X ist rechtwinklig zur Linearbewegungsachse Z ausgerichtet. Beide Linearbewegungsachsen X,Z sind dabei horizontal und parallel zur ebenen Oberfläche eines die Aufbauten der Maschine 1 tragenden Maschinenbetts 7 ausgerichtet. Senkrecht dazu und in vertikaler Richtung ausgerichtet ist die dritte Linearbewegungsachse Y, um die eine im Bereich des einen Endes der Linearführung 6 angeordnete Beladungseinrichtung 8 schwenkt, um fertig bearbeitete Zahnräder R von der Werkstückspindel 2 zu übernehmen und auf einer Fördereinrichtung 9 abzulegen und von dort neu zu bearbeitende Zahnräder R an die Werkstückspindel 2 zu übergeben.

An deren anderen Endabschnitt ist parallel zur Linearführung 6 ein Gestell 10 angeordnet, in dem eine Werkzeugspindel 11 um die parallel zur Linearführung 6 angeordnete Schwenkachse W verschwenkbar gelagert ist. In der Werkzeugspindel 11 ist ein als innenverzahnter Honring ausgebildetes Honwerkzeug O gelagert und um die Drehachse B rotierend angetrieben.

Die Drehachsen B,C schneiden sich unter einem Achskreuzwinkel Σ, der während der Honbearbeitung des jeweils zu bearbeitenden, in der Werkstückspindel 2 gespannten Zahnrads R durch Verschwenken der Werkzeugspindel 11 um die Schwenkachse W eingestellt und verändert werden kann.

Die Zustellung des zu bearbeitenden Zahnrads R in bezogen auf das Honwerkzeug O radialer Richtung erfolgt während der Bearbeitung über eine Verstellung des Querschlittens 5 entlang der Linearbewegungsachse X.

Gleichzeitig führt das Zahnrad R eine oszillierende Bewegung in Richtung der achsparallel zur Drehachse C ausgerichteten Linearbewegungsachse Z aus. Dabei wird das jeweilige Zahnrad R von einer Endstellung seiner in radialer Richtung erfolgenden Zustellung in Richtung der Linearbewegungsachse Z durch das Honwerkzeug O bewegt, so dass die Zähne OZ des Honwerkzeugs O in die ihnen jeweils zugeordneten Zahnlücken RL des Zahnrads R greifen und das Honwerkzeug O und das Zahnrad R aufeinander abwälzen.

Wenn das Zahnrad R, wie im vorliegenden Beispiel, eine Schrägverzahnung aufweist und das Honwerkzeug O entsprechend schrägverzahnt ist, wird der oszillierenden Bewegung in Richtung Z eine Drehbewegung des Zahnrads R um seine Drehachse C überlagert, so dass die einzelnen Zähne RZ des Zahnrads R in einer Schraubenbewegung durch das Honwerkzeug O bewegt werden.

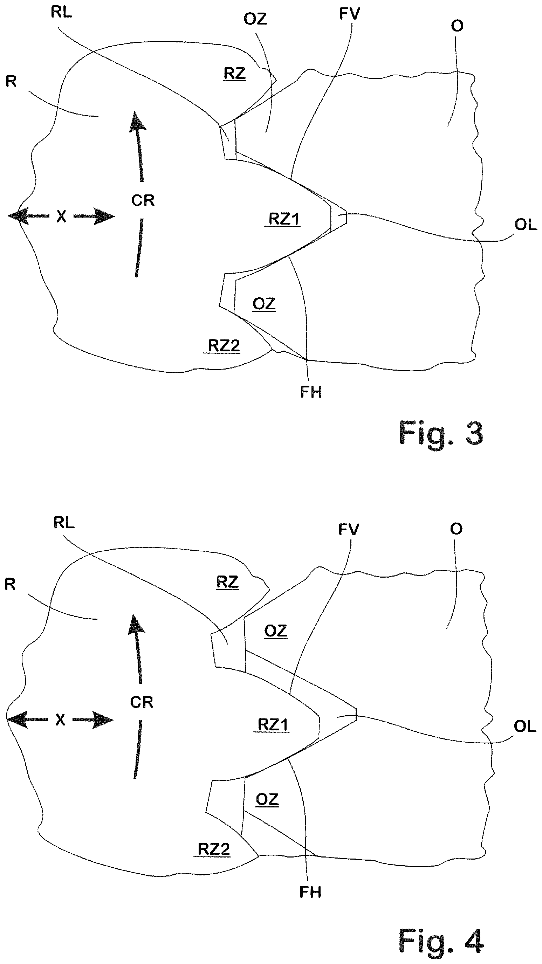

Während des Durchfahrens durch die jeweilige Zahnlücke RL besteht zwischen den Zähnen OZ des Honwerkzeugs O und den Flanken FV,FH der Zähne RZ1,RZ2, die die Zahnlücke RL begrenzen, welche dem jeweiligen Zahn OZ des Honwerkzeugs O zugeordnet ist, Kontakt und es wird dort Material entsprechend der Zustellung in Richtung X abgetragen (Fig. 3) .

Nähert sich der jeweilige Zahn OZ in Folge der entlang der Linearbewegungsrichtung X zwecks Zustellung in radialer Richtung ausgeführten Relativbewegung zwischen Honwerkzeug O und Zahnrad R der in der jeweiligen Bewegungsrichtung vor ihm liegenden Zahnkante RK, so wird das Zahnrad R durch eine zusätzliche Verdrehung um seine Drehachse C so in seiner Drehstellung verändert, dass der jeweilige Zahn OZ des Honwerkzeugs O in Anlage an einer der Zahnflanken FV,FH gehalten wird, bis er vollständig aus der betreffenden Zahnlücke RL des Zahnrads R ausgetaucht ist. In Fig. 4 ist dies am Beispiel der in Drehrichtung CR des Zahnrads R hinteren Flanke FH dargestellt. In einem weiteren Umlauf wird dieser Vorgang für die in Drehrichtung CR vordere Flanke FV des jeweiligen Zahns RZ des Zahnrads R wiederholt.

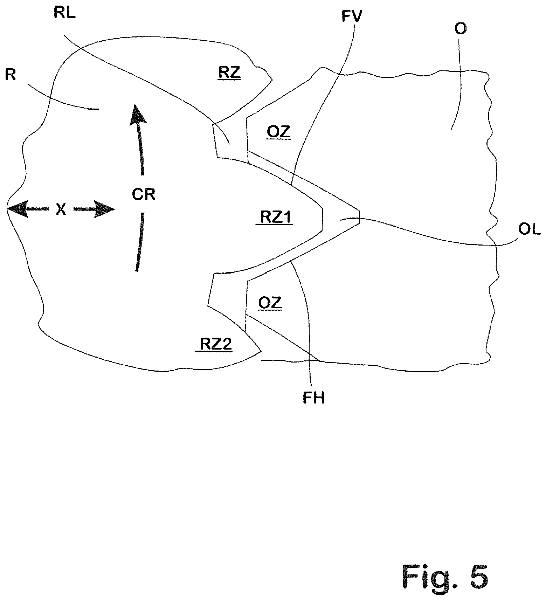

Ohne die erfindungsgemäße Nachführung der Drehstellung des Zahnrads R würde der Zahn RZ beim in radialer Richtung X erfolgenden Austauchen aus der Zahnlücke, wie in Fig. 5 gezeigt, vom Honwerkzeug O abheben, so dass kein Kontakt mehr zwischen dem Honwerkzeug O und dem Zahn RZ bestünde.

Mit der Erfindung steht somit ein Verfahren zum Honbearbeiten eines Zahnrads R zur Verfügung, bei dem das Zahnrad R und das Honwerkzeug O miteinander kämmen und sich die Drehachsen B,C von Zahnrad R und Honwerkzeug O unter dem Achskreuzwinkel Σ kreuzen. Zahnrad R und Honwerkzeug O führen dabei eine in Achsrichtung Z der Drehachse C des Zahnrads R oszillierende Relativbewegung aus und werden gleichzeitig in bezogen auf die Drehachse C des Zahnrads R radialer Richtung X ausgehend von einer Endstellung aufeinander zugestellt, um einen Materialabtrag am Zahnrad R zu bewirken. Um mit einem solchen Verfahren Zahnräder R so zu bearbeiten, dass ihre Oberflächenbeschaffenheit im Hinblick auf die Geräuschentwicklung eines Getriebens, in dem sie verbaut werden, weiter optimiert ist, schlägt die Erfindung vor, dass bei der in Achsrichtung Z der Drehachse C des Zahnrads R gerichteten oszillierenden Relativbewegung die Drehstellung des Zahnrads R bezogen auf seine Drehachse C in Abhängigkeit von der Zustellung in radialer Richtung X derart verändert wird, dass während des zur Endstellung der radialen Zustellung führenden Austauchens aus der jeweils zugeordneten Zahnlücke RL des Zahnrads R Kontakt zwischen dem jeweiligen Zahn OZ des Honwerkzeugs O und einer der Flanken FH der die Zahnlücke RL begrenzenden Zähne RZ2 des Zahnrads R besteht.

### BEZUGSZEICHEN

- B: Drehachse der Werkzeugspindel 11
- CR: Drehrichtung des Zahnrads R
- C: Drehachse der Werkstückspindel 2
- FV,FH: Flanken der Zähne RZ1,RZ2
- O: Honwerkzeug
- OL: Zahnlücke des Honwerkzeugs O
- OZ: Zähne des Honwerkzeugs O
- R: Zahnräder
- RZ,RZ1,RZ2: Zahn des Zahnrads R
- RL: Zahnlücken des Zahnrads R
- RK: Zahnkante
- ∑: Achskreuzwinkel
- W: Schwenkachse der Werkzeugspindel 11
- X,Y,Z: Linearbewegungsachsen
- 1: Maschine für die Honbearbeitung von Zahnrädern R
- 2: Werkstückspindel
- 3: Längsschlitten
- 4: Linearführung
- 5: Querschlitten
- 6: Linearführung
- 7: Maschinenbett
- 8: Beladungseinrichtung
- 9: Fördereinrichtung
- 10: Gestell
- 11: Werkzeugspindel

## Patentansprüche

1. Verfahren zum Honbearbeiten eines Zahnrads (R), bei dem das jeweils zu honende Zahnrad (R) und ein mit einer zur Verzahnung des Zahnrads (R) korrespondierenden Verzahnung versehenes Honwerkzeug (O) um jeweils eine Drehachse (B,C) drehend miteinander in Eingriff gebracht werden, wobei die Drehachsen (B,C) von Zahnrad (R) und Honwerkzeug (O) unter einem Achskreuzwinkel (Σ) einander kreuzend ausgerichtet sind, wobei Zahnrad (R) und Honwerkzeug (O) in Achsrichtung (Z) der Drehachse (C) des Zahnrads (R) zwischen zwei Umkehrstellungen oszillierend relativ zueinander bewegt werden und wobei das Zahnrad (R) und das Honwerkzeug (O) in bezogen auf die Drehachse (C) des Zahnrads (R) radialer Richtung (X) ausgehend von einer Endstellung aufeinander zugestellt werden, um einen Materialabtrag am Zahnrad (R) zu bewirken, **dadurch gekennzeichnet, dass** bei der in Achsrichtung (Z) der Drehachse (C) des Zahnrads (R) gerichteten oszillierenden Relativbewegung die Drehstellung des Zahnrads (R) bezogen auf seine Drehachse (C) in Abhängigkeit von der Zustellung in radialer Richtung (X) derart verändert wird, dass während des zur Endstellung führenden, in radialer Richtung (X) gerichteten Austauchens aus der jeweils zugeordneten Zahnlücke (RL) des Zahnrads (R) ein Kontakt zwischen dem jeweiligen Zahn (OZ) des Honwerkzeugs (O) und einer der Flanken (FH) der die betreffende Zahnlücke (RL) begrenzenden Zähne (RZ2) des Zahnrads (R) besteht.

2. Verfahren nach Anspruch 1, **dadurch gekennzeichnet, dass** das Zahnrad (R) eine Außenverzahnung und das Honwerkzeug (O) eine Innenverzahnung aufweisen.

3. Verfahren nach Anspruch 2, **dadurch gekennzeichnet, dass** das Honwerkzeug (O) und das zu honende Zahnrad (R) jeweils eine Schrägverzahnung aufweisen und **dass** der in Richtung (Z) der Drehachse (C) des Zahnrads (R) gerichteten oszillierenden Relativbewegung eine Drehung um die Drehachse (C) des Zahnrads (R) überlagert wird.

4. Verfahren nach einem der voranstehenden Ansprüche, **dadurch gekennzeichent, dass**
sowohl während des von der jeweiligen Endstellung der in radialer Richtung erfolgenden Zustellung ausgehenden Eintauchens in als auch beim Austauchen aus der jeweiligen Zahnlücke (RL) des Zahnrads (R) ein dauerhafter Kontakt zwischen einer der Zahnflanken (FV,FH) der die Zahnlücke (RL) begrenzenden Zähne (RZ, RZ1, RZ2) des Zahnrads (R) und dem zugeordneten Zahn (OZ) des Honwerkzeugs (O) besteht.

5. Verfahren nach einem der voranstehenden Ansprüche, **dadurch gekennzeichent, dass** das Zahnrad (R) bei der Honbearbeitung mindestens zwei Umläufe um seine Drehachse (C) ausführt und **dass** der jeweilige Zahn (OZ) des Honwerkzeugs (O) bei einem Umlauf während des Austauchens mit derjenigen Flanke (FV) der ihm jeweils zugeordneten Zahnlücke (RL) des Zahnrads (R) in Kontakt gehalten wird, die die Zahnlücke (RL) an ihrer in Drehrichtung (CR) des Zahnrads (R) gesehen vorne liegenden Seite begrenzt, und bei einem anderen Umlauf während des Austauchens mit derjenigen Flanke (FH) der ihm dann zugeordneten Zahnlücke (RL) bis zu seinem vollständigen Austritt aus dieser Zahnlücke (RL) in Kontakt gehalten wird, die die Zahnlücke (RL) an ihrer in Drehrichtung (CR) des Zahnrads (R) gesehen hinten liegenden Seite begrenzt.

6. Verfahren nach einem der voranstehenden Ansprüche, **dadurch gekennzeichent, dass** der Kontakt zwischen der jeweiligen Flanke (FV,FH) des Zahns (RZ,RZ1,RZ2) des Zahnrades (R) und der zugeordneten Flanke des Zahns (OZ) des Honwerkzeugs (O) dauernd aufrechterhalten wird, bis das Zahnrad (R) seine Endstellung der in radialer Richtung erfolgenden Zustellung erreicht hat.

## Claims

1. Method for honing a gear wheel (R), in which the gear wheel (R) to be respectively honed and a honing tool (O) provided with a toothing corresponding to the toothing of the gear wheel (R) are moved into engagement with one another so as to be rotatable about one rotational axis (B, C) in each case, wherein the rotational axes (B, C) of gear wheel (R) and honing tool (O) are aligned intersecting one another at an axis-intersecting angle (Σ), wherein gear wheel (R) and honing tool (O) are moved relative to one another in an oscillating manner in the axial direction (Z) of the rotational axis (C) of the gear wheel (R) between two reverse positions and wherein the gear wheel (R) and the honing tool (O) are advanced towards one another proceeding from an end position in relation to the rotational axis (C) of the gear wheel (R) in a radial direction (X) in order to effect a material removal on the gear wheel (R), **characterised in that** in the case of the oscillating relative movement directed in the axial direction (Z) of the rotational axis (C) of the gear wheel (R), the rotational position of the gear wheel (R), in relation to its rotational axis (C), is changed as a function of the advance in the radial direction (X) in such manner that during the exiting, which leads to the end position and is directed in the radial direction (X), from the respectively assigned tooth spacing (RL) of the gear wheel (R), there is contact between the respective tooth (OZ) of the honing tool (O) and one of the flanks (FH) of the teeth (RZ2) of the gear wheel (R) delimiting the tooth spacing (RL) in question.

2. Method according to claim 1, **characterised in that** the gear wheel (R) has an outer toothing and the honing tool (O) has an inner toothing.

3. Method according to claim 2, **characterised in that** the honing tool (O) and the gear wheel (R) to be honed each have an oblique toothing and **in that** the oscillating relative movement directed in the direction (Z) of the rotational axis (C) of the gear wheel (R) is overlapped by a rotation about the rotational axis (C) of the gear wheel (R).

4. Method according to any one of the preceding claims, **characterised in that** both during the insertion proceeding from the respective end position of the advancement which takes place in the radial direction and the exiting from the respective tooth spacing (RL) of the gear wheel (R), there is permanent contact between one of the tooth flanks (FV, FH) of the teeth (RZ, RZ1, RZ2) of the gear wheel (R) delimiting the tooth spacing (RL) and the assigned tooth (OZ) of the honing tool (O).

5. Method according to any one of the preceding claims, **characterised in that** the gear wheel (R), during the honing operation, performs at least two revolutions about its rotational axis (C) and **in that** the respective tooth (OZ) of the honing tool (O), in the case of a revolution during the exiting, is held in contact with the flank (FV) of the tooth spacing (RL) of the gear wheel (R) respectively assigned to said tooth, which delimits the tooth spacing (RL) on its side located at the front when viewed in the rotational direction (CR) of the gear wheel (R) and in the case of another revolution during the exiting is held in contact with the flank (FH) of the tooth spacing (RL) then assigned to it until its full exiting from this tooth spacing (RL), which delimits the tooth spacing (RL) on its side located at the rear when viewed in the rotational direction (CR) of the gear wheel (R).

6. Method according to any one of the preceding claims, **characterised in that** the contact between the respective flank (FV, FH) of the tooth (RZ, RZ1, RZ2) of the gear wheel (R) and the assigned flank of the tooth (OZ) of the honing tool (O) is permanently maintained until the gear wheel (R) has reached its end position of the advancement which takes place in the radial direction.

## Revendications

1. Procédé de rodage d'une roue dentée (R),
- dans lequel la roue dentée (R) à roder et un outil de rodage (0) muni d'une denture correspondant à la denture de la roue dentée (R) sont mis en prise l'un avec l'autre de manière à tourner autour d'un axe de rotation respectif (B, C),
- où les axes de rotation (B, C) de la roue dentée (R) et de l'outil de rodage (0) sont orientés de manière à se croiser selon un angle de croisement d'axe (Σ),
- où la roue dentée (R) et l'outil de rodage (O) sont mus de manière oscillante l'un par rapport à l'autre dans la direction axiale (Z) de l'axe de rotation (C) de la roue dentée (R) entre deux positions d'inversion, et
- où la roue dentée (R) et l'outil de rodage (O) sont déplacés l'un vers l'autre dans une direction radiale (X) par rapport à l'axe de rotation (C) de la roue dentée (R), en partant d'une position finale, afin d'effectuer un enlèvement de matière sur la roue dentée (R),
**caractérisé**
- **en ce que**, pendant le mouvement relatif oscillant dirigé dans la direction axiale (Z) de l'axe de rotation (C) de la roue dentée (R), la position de rotation de la roue dentée (R) par rapport à son axe de rotation (C) est modifiée en fonction du déplacement dans la direction radiale (X) de telle sorte que, pendant l'interaction des entredents (RL) respectifs attribués de la roue dentée (R) menant à la position finale (Z) dans la direction radiale (X), il y a un contact entre la dent respective (OZ) de l'outil de rodage (O) et l'un des flancs (FH) de l'entredent (RL) concerné délimitant les dents (RZ2) de la roue dentée (R).

2. Procédé selon la revendication 1,
**caractérisé**
**en ce que** la roue dentée (R) a une denture externe et l'outil de rodage (0) a une denture interne.

3. Procédé selon la revendication 2,
**caractérisé**
- **en ce que** l'outil de rodage (0) et la roue dentée (R) à roder ont chacun une denture hélicoïdale, et
- **en ce qu'**une rotation autour de l'axe de rotation (C) de la roue dentée (R) est superposée au mouvement relatif oscillant dirigé dans la direction (Z) de l'axe de rotation (C) de la roue dentée (R).

4. Procédé selon l'une des revendications précédentes,
**caractérisé**
**en ce que**, aussi bien pendant la plongée dans la denture respective (RL) de la roue dentée (R), qui commence à partir de la position finale respective du déplacement se déroulant dans la direction radiale, que pendant la plongée hors de la denture respective (RL), il y a un contact permanent entre l'un des flancs (FV, FH) des entredents (RZ, RZ1, RZ2) de la roue dentée (R) qui délimitent la denture (RL), et la dent associée (OZ) de l'outil de rodage (0).

5. Procédé selon l'une des revendications précédentes,
**caractérisé**
- **en ce que** la roue dentée (R) effectue au moins deux révolutions autour de son axe de rotation (C) pendant le rodage, et
- **en ce que** la dent respective (OZ) de l'outil de rodage (O),
o lors d'une révolution au cours de l'interaction avec le flanc respectif (FV) de l'entredent (RL) de la roue dentée (R) qui lui est associé, est maintenue en contact, lequel flanc, vu dans le sens de rotation (CR) de la roue dentée (R), délimite l'entredent (RL) sur son côté situé à l'avant, et
o lors d'une autre révolution au cours de l'interaction avec le flanc respectif (FV) de l'entredent (RL) de la roue dentée (R) qui lui est associé, est maintenue en contact jusqu'à son émergence complète en dehors de cet entredents (RL), lequel flanc, vu dans le sens de rotation (CR) de la roue dentée (R), délimite la denture (RL) sur son côté arrière.

6. Procédé selon l'une des revendications précédentes,
**caractérisé**
**en ce que** le contact entre le flanc respectif (FV, FH) de la dent (RZ, RZ1, RZ2) de la roue dentée (R) et le flanc associé de la dent (OZ) de l'outil de rodage (0) est maintenu en continu jusqu'à ce que la roue dentée (R) ait atteint sa position finale du déplacement se déroulant dans la direction radiale.
